(19) 

Europäisches Patentamt

European Patent Office

Office européen des brevets

(11) **EP 4 495 911 A1**

(12) **EUROPEAN PATENT APPLICATION**
published in accordance with Art. 153(4) EPC

(43) Date of publication:
**22.01.2025   Bulletin 2025/04**

(21) Application number: **23777634.9**

(22) Date of filing: **06.02.2023**

(51) International Patent Classification (IPC):
**G08G 1/16** (2006.01)    **H04W 4/40** (2018.01)

(52) Cooperative Patent Classification (CPC):
**G08G 1/16; H04W 4/40**

(86) International application number:
**PCT/CN2023/074615**

(87) International publication number:
**WO 2023/185255 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022   CN 202210334288**

(71) Applicant: **ZTE Corporation
Shenzhen, Guangdong 518057 (CN)**

(72) Inventor: **WU, Rui
Shenzhen, Guangdong 518057 (CN)**

(74) Representative: **Savi, Massimiliano et al
Notarbartolo & Gervasi S.p.A.
Viale Achille Papa, 30
20149 Milano (IT)**

(54) **COLLISION EARLY WARNING METHOD, VEHICLE-MOUNTED TERMINAL AND STORAGE MEDIUM**

(57)     Embodiments of the present disclosure provide a collision early warning method, a vehicle-mounted terminal and a storage medium, related to the field of smart automobiles. The method comprises: acquiring a map message (MAP), state information of a host vehicle and basic security messages (BSM) of multiple remote vehicles; according to the MAP and the state information, determining whether the host vehicle is about to drive into an intersection; if the host vehicle is about to drive into an intersection, then, according to the MAP, the state information and the BSM of each of the distant vehicles, screening out a target remote vehicle having a risk of collision with the host vehicle in the intersection from among the multiple remote vehicles; and during the process from when the host vehicle enters the intersection to when the host vehicle exits the intersection, if it is predicted that the host vehicle will with one of the target remote vehicles, then outputting collision early warning information. The present disclosure greatly improves vehicle collision risk detection accuracy and early warning accuracy.

```
                                                              S101
┌──────────────────────────────────────────────┐
│ Obtain MAP, status information of a host       │
│ vehicle, and BSMs of a plurality of remote     │
│ vehicles                                       │
└──────────────────────────────────────────────┘
                        │
                        ▼                         S102
┌──────────────────────────────────────────────┐
│ Determine, based on the MAP and the status     │
│ information, whether the host vehicle is about  │
│ to enter an intersection                       │
└──────────────────────────────────────────────┘
                        │
                        ▼                         S103
┌──────────────────────────────────────────────┐
│ Select a target remote vehicle which has a     │
│ risk of collision with the host vehicle at the │
│ intersection from the plurality of remote      │
│ vehicles based on the MAP, the status          │
│ information, and a BSM of each remote vehicle   │
│ if the host vehicle is about to enter the      │
│ intersection                                   │
└──────────────────────────────────────────────┘
                        │
                        ▼                         S104
┌──────────────────────────────────────────────┐
│ Output, in a process from the host vehicle     │
│ entering the intersection to the host vehicle  │
│ exiting the intersection, collision warning    │
│ information if it is predicted that the host   │
│ vehicle is about to collide with the target    │
│ remote vehicle                                 │
└──────────────────────────────────────────────┘
```

FIG. 1

EP 4 495 911 A1

## Description

### CROSS-REFERENCE TO RELATED APPLICATION

This application is filed on the basis of Chinese patent application No. CN202210334288.0 filed on March 31, 2022 and entitled "COLLISION WARNING METHOD, IN-VEHICLE TERMINAL DEVICE, AND STORAGE MEDIUM", and claims priority to the Chinese patent application, the entire contents of which are incorporated herein by reference.

### TECHNICAL FIELD

The present disclosure relates to the technical field of intelligent automobiles, and more particularly, to a collision warning method, an in-vehicle terminal device, and a storage medium.

### BACKGROUND

With the widespread use of vehicles and the advancement of Internet of Vehicles technologies, applications and algorithms of the vehicular wireless communication technology (Vehicle-to-X (V2X)) have garnered increasing attention. One of the most critical applications of this technology is the vehicle warning function, which alerts drivers to potential dangers using the V2X technology, thereby reducing traffic accidents.

For example, intersections often have complex road conditions where vehicles frequently change lanes, increasing the likelihood of traffic accidents. An existing practice is to perform collision detection on a vehicle entering the intersection using the V2X technology. If there is a collision risk, a driver is warned in time such that the driver can make a driving decision in advance to avoid a traffic accident. At present, the collision risk is calculated for each vehicle at the intersection, resulting in excessive calculation and waste of resources. Additionally, existing risk warning is not accurate enough. For example, when the vehicle is far away from the intersection, repeated warning at an early stage may disrupt the driver's focus. Conversely, if the warning is issued too late when the vehicle is close to the intersection, the driver may not have sufficient time to adjust their driving strategy or brake effectively. Therefore, accurately providing collision warnings to vehicles approaching an intersection is an urgent problem that needs to be addressed.

### SUMMARY

Embodiments of the present disclosure aim to provide a collision warning method, an in-vehicle terminal device, and a storage medium, to accurately provide collision warning for a vehicle that is about to pass through an intersection.

In accordance with a first aspect of the present disclosure, an embodiment provides a collision warning method, including:

obtaining a Map Message (MAP), status information of a Host Vehicle (HV), and Basic Safety Messages (BSMs) of a plurality of Remote Vehicles (RVs);

determining, based on the MAP and the status information, whether the HV is about to enter an intersection;

selecting a target RV which has a risk of collision with the HV at the intersection from the plurality of RVs based on the MAP, the status information, and a BSM of each RV in response to the HV being about to enter the intersection; and

outputting, in a process from the HV entering the intersection to the HV exiting the intersection, collision warning information in response to predicting that the HV is about to collide with the target RV.

In accordance with a second aspect of the present disclosure, an embodiment provides an in-vehicle terminal device, including a processor, a memory, a computer program stored in the memory and executable by the processor, and a data bus for connection and communication between the processor and the memory, the computer program, when executed by the processor, causes the processor to implement the steps of any collision warning method according to the present disclosure.

In accordance with a third aspect of the present disclosure, an embodiment provides a computer-readable storage medium, storing one or more programs which, when executed by one or more processors, cause the one or more processors to implement the steps of any collision warning method according to the present disclosure.

### BRIEF DESCRIPTION OF DRAWINGS

FIG. 1 is a schematic flowchart of a collision warning method according to an embodiment of the present disclosure;
FIG. 2 is a schematic sub-step flowchart of the collision warning method in FIG. 1;
FIG. 3 is a schematic diagram of a scenario of a collision warning method according to an embodiment of the present disclosure;
FIG. 4 is a schematic flowchart of another scenario of a collision warning method according to an embodiment of the present disclosure;
FIG. 5 is a schematic flowchart of another scenario of a collision warning method according to an embodiment of the present disclosure;
FIG. 6 is a schematic flowchart of another scenario of a collision warning method according to an embodiment of the present disclosure; and

FIG. 7 is a schematic structural block diagram an invehicle terminal device according to an embodiment of the present disclosure.

**DETAILED DESCRIPTION**

The technical schemes in the embodiments of the present disclosure will be described clearly and completely below in conjunction with the accompanying drawings in the embodiments of the present disclosure. It is clear that the described embodiments are some but not all of the embodiments of the present disclosure. All other embodiments that can be derived by those skilled in the art, based on the disclosed embodiments and without requiring creative effort, are within the scope of protection of the present disclosure.

The flowcharts presented in the accompanying drawings are provided as examples and may not encompass all content or operations/steps, nor are the operations/steps necessarily executed in the order described. For instance, certain operations/steps may be further subdivided, combined, or partially merged. Thus, the actual execution order may vary depending on the specific situation.

It should be understood that the terms used in the present disclosure are intended solely to describe specific embodiments and are not meant to limit the scope of the disclosure. As used in this disclosure and the claims, the singular forms "a," "an," and "the" are intended to include their plural counterparts unless the context explicitly dictates otherwise.

Embodiments of the present disclosure provide a collision warning method, an in-vehicle terminal device, and a storage medium. The collision warning method may be applied to an in-vehicle terminal device. The in-vehicle terminal device is a device based on V2X. For example, the in-vehicle terminal device may be an On-Board Unit (OBU).

Some specific implementations of the present disclosure are described below in detail in conjunction with the accompanying drawings. The following embodiments and features in the embodiments may be mutually combined if not in conflict.

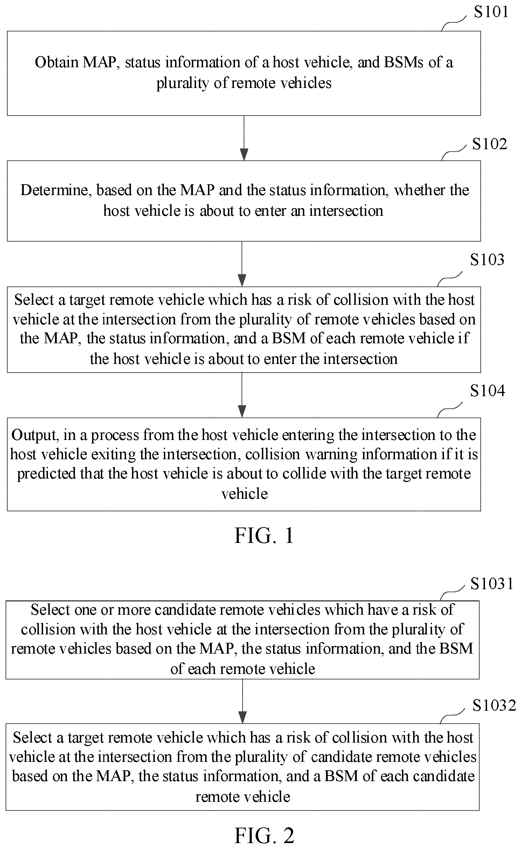

FIG. 1 is a schematic flowchart of a collision warning method according to an embodiment of the present disclosure.

As shown in FIG. 1, the collision warning method includes the following steps S101 to S104.

At S101, a MAP, status information of an HV, and BSMs of a plurality of RVs are obtained.

The MAP is broadcast by a Roadside Unit (RSU) to transfer map information of a local region to vehicles. The MAP includes intersection information, road section information, lane information, a connection relationship between roads, and the like in the local region. The status information of the HV is basic traveling status information of the HV, and the status information includes latitude and longitude, speed, heading angle, acceleration, and other information. The BSM of the RV includes speed, turning, braking, double signal, and location information of the RV.

In an embodiment, the MAP broadcast by the RSU is obtained, such that a MAP at a location of the HV can be accurately obtained, and a BSM of an RV in a preset region around the HV can be obtained. The BSM is a BSM respectively broadcast by each RV and received by the HV. The status information of the HV is obtained from a control device of the HV. The control device may be set depending on an actual situation, which is not specifically limited in this embodiment. For example, the control device may be a central control system of the HV. The preset region may be set depending on an actual situation, which is not specifically limited in this embodiment. For example, the preset region may be set to be within 500 meters around the location of the HV. It is to be noted that the RSU or cloud may receive data from a radar or a sensor, create a BSM based on the data, and broadcast the BSM, such that the HV obtains the broadcast BSM.

At S102, whether the HV is about to enter an intersection is determined based on the MAP and the status information.

The intersection may be a three-way intersection, a crossroad, a five-way intersection, or an intersection of another type, which is not specifically limited in this embodiment. For ease of description, the crossroad is used as an example in embodiments.

In an embodiment, the status information includes the heading angle of the HV. The heading angle is an angle between a traveling direction of the HV and a due north direction. The MAP includes a road angle between each road in a region in which the HV is located and the due north direction. An angle difference between the heading angle of the HV and the road angle of each road is determined to obtain an angle difference between the HV and each road, and a road corresponding to a minimum angle difference is determined as a traveling road of the HV. Whether there is an intersection within a preset distance on the traveling road of the HV is determined based on location information of the HV and the MAP. If it is determined that there is an intersection within the preset distance on the traveling road of the HV, it is determined that the HV is about to enter the intersection. The preset distance may be set depending on an actual situation, which is not specifically limited in this embodiment. For example, the preset distance may be set to 150 meters. Whether the HV is about to enter an intersection can be accurately determined by determining the traveling road of the HV and determining whether there is an intersection within the preset distance on the traveling road.

For example, the heading angle of the HV is 100°, and the region in which the HV is located includes a road 1, a road 2, a road 3, and a road 4. An angle between the road 1 and the due north direction is 95°, an angle between the road 2 and the due north direction is 185°, an angle between the road 3 and the due north direction is 275°, and an angle between the road 4 and the due north direction is 5°. From the above, it can be learned that a road angle between the HV and the road 1 is 5°, a road angle between the HV and the road 2 is 95°, a road angle between the HV and the road 3 is 185°, and a road angle between the HV and the road 4 is 95°. As the road angle between the HV and the road 1 is minimum, the road 1 is the traveling road of the HV. It is determined whether there is an intersection within 150 meters on the road 1 in the traveling direction of the HV. If there is an intersection within 150 meters on the road 1 in the traveling direction of the HV, it is determined that the HV is about to enter the intersection.

In an embodiment, determining whether the HV is about to enter an intersection includes: obtaining a perpendicular distance between the HV and each lane in the traveling road to obtain a lane distance from the HV to each lane, determining a lane corresponding to a minimum lane distance as a traveling lane of the HV, determining, based on the location information of the HV and the MAP, whether there is an intersection within the preset distance in the traveling lane, and if there is an intersection within the preset distance in the traveling lane, determining that the HV is about to enter the intersection. The perpendicular distance between the HV and each lane in the traveling road refers to a distance between a center point of the HV and a centerline of the lane. It is to be noted that if the traveling road of the HV has only one lane, the traveling road is the lane in which the HV is located. Alternatively, the traveling lane of the HV may be determined in the foregoing manner. The traveling lane of the HV can be accurately known by determining the perpendicular distance between the HV and each lane.

For example, the road includes a lane 1, a lane 2, and a lane 3. A perpendicular distance between the HV and the lane 1 is 3.1 meters, a perpendicular distance between the HV and the lane 2 is 0.1 meter, and a perpendicular distance between the HV and the lane 3 is 2.9 meters. The perpendicular distance 0.1 meter between the HV and the lane 2 is a minimum distance between the HV and the lanes. Therefore, the HV is traveling in the lane 2. Whether there is an intersection within 150 meters in the lane 2 is determined based on the location information of the HV and the MAP. If it is determined that there is an intersection within 150 meters in the lane 2, it is determined that the HV is about to enter the intersection.

In an embodiment, Global Positioning System (GPS) data during traveling of the HV is obtained, and whether there is an intersection within the preset distance in the traveling direction of the HV is determined based on the data and the MAP. If it is determined that there is an intersection within the preset distance in the traveling direction of the HV, it is determined that the HV is about to enter the intersection.

At S103, a target RV which has a risk of collision with the HV at the intersection is selected from the plurality of RVs based on the MAP, the status information, and a BSM of each RV if the HV is about to enter the intersection.

The target RV is an RV which has a great risk of collision with the HV at the intersection.

In an embodiment, as shown in FIG. 2, step S103 includes sub-steps S1031 and S1032.

At S1031, one or more candidate RVs which have a risk of collision with the HV at the intersection are selected from the plurality of RVs based on the MAP, the status information, and the BSM of each RV.

The candidate RV is an RV which is traveling at the intersection and has a traveling trajectory intersecting with a traveling trajectory of the HV.

In an embodiment, the plurality of RVs are grouped based on the MAP, the status information, and the BSM of each RV to obtain a plurality of RV groups. A collision detection model of the intersection is obtained, and a collision detection condition corresponding to each RV group is obtained from the collision detection model. Each RV in each RV group is screened based on the collision detection condition corresponding to each RV group to obtain one or more candidate RVs which have a risk of collision with the HV at the intersection. The collision detection model is preset based on collision simulation, and the collision simulation may be set depending on an actual situation, which is not specifically limited in this embodiment. Efficiency of collision detection can be improved by grouping the RVs, and accuracy of candidate RV screening can be improved by screening each RV group based on the collision detection condition.

In an embodiment, the plurality of RVs may be grouped in the following manner based on the MAP, the status information, and the BSM of each RV to obtain a plurality of RV groups. The status information includes the heading angle of the HV, and the BSM of the RV includes a heading angle of the RV. It is determined based on the MAP that there are several RV groups. A first heading angle difference between the heading angle of the HV and a heading angle of each RV is determined, and an RV corresponding to a first heading angle difference greater than or equal to a first preset difference and less than or equal to a second preset difference is collected into a first RV group. A first deflection angle between a connection line between the HV and the RV and the due north direction is determined, and uncollected RVs are collected into a second RV group and a third RV group based on the first deflection angle and the heading angle of the HV. The first preset difference and the second preset difference may be set depending on an actual situation, which are not specifically limited in this embodiment.

In an embodiment, the uncollected RVs may be collected into the second RV group and the third RV group based on the first deflection angle and the heading angle of the HV in the following manner. A difference between the first deflection angle and the heading angle of the HV is determined to obtain a second heading angle difference. An RV corresponding to a second heading angle difference greater than a third preset difference and less than a fourth preset difference is collected into the second RV group. An RV corresponding to a second heading angle difference greater than a fifth predicted difference and less than a sixth preset difference is collected into the third RV group. The third preset difference, the fourth preset difference, the fifth preset difference, and the sixth preset difference may be set depending on an actual situation, which are not specifically limited in this embodiment.

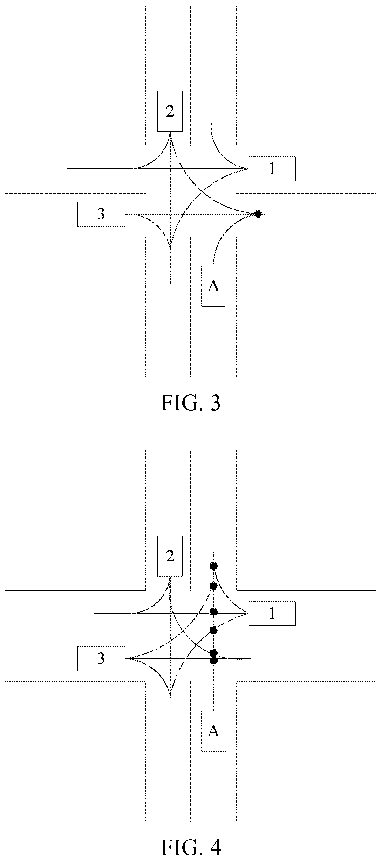

For example, as shown in FIG. 3, each RV in each RV group may be screened in the following manner based on the collision detection condition corresponding to each RV group to obtain one or more candidate RVs which have a risk of collision with the HV at the intersection. The RV groups include a first RV group, a second RV group, and a third RV group. The first RV group includes an RV 1, the second RV group includes an RV 2, and the third RV group includes an RV 3. When the HV A turns right, the RV 1, the RV 2, and the RV 3 are screened based on collision detection conditions, and candidate RVs which have a risk of collision with the HV at the intersection include the RV 2 and the RV 3. When the HV A goes straight, the RV 1, the RV 2, and the RV 3 are screened based on collision detection conditions, and candidate RVs which have a risk of collision with the HV at the intersection include the RV 1, the RV 2, and the RV 3. When the HV A turns left, the RV 1, the RV 2, and the RV 3 are screened based on collision detection conditions, and candidate RVs which have a risk of collision with the HV at the intersection include the RV 1, the RV 2, and the RV 3.

For example, each RV in each RV group may be screened in the following manner based on the collision detection condition corresponding to each RV group to obtain one or more candidate RVs which have a risk of collision with the HV at the intersection. The RV groups include a first RV group, a second RV group, and a third RV group. The first RV group includes an RV 1, the second RV group includes an RV 2, and the third RV group includes an RV 3. When the HV A turns right, as shown in FIG. 3, based on the collision detection conditions corresponding to the RVs in the collision detection model, the RV 1 includes going straight, turning left, and turning right, the RV 2 includes going straight, turning left, and turning right, and the RV 3 includes going straight, turning left, and turning right. There is a collision point between the RV 2 and the HV A if the RV 2 turns left, and there is a collision point between the RV 3 and the HV A if the RV 3 goes straight. Therefore, when the HV A turns right, candidate RVs include the RV 2 and the RV 3. A black circle mark in the figure represents a collision point between the HV and an RV.

When the HV A goes straight, as shown in FIG. 4, based on the collision detection conditions corresponding to the RVs in the collision detection model, the RV 1 includes going straight, turning left, and turning right, the RV 2 includes going straight, turning left, and turning right, and the RV 3 includes going straight, turning left, and turning right. There is a collision point between the RV 1 and the HV A if the RV 1 turns right, goes straight, or turns left, there is a collision point between the RV 2 and the HV A if the RV 2 turns left and goes straight, and there is a collision point between the RV 3 and the HV A if the RV 3 goes straight or turns left. Therefore, when the HV A goes straight, candidate RVs include the RV 1, the RV 2, and the RV 3. A black circle mark in the figure represents a collision point between the HV and an RV.

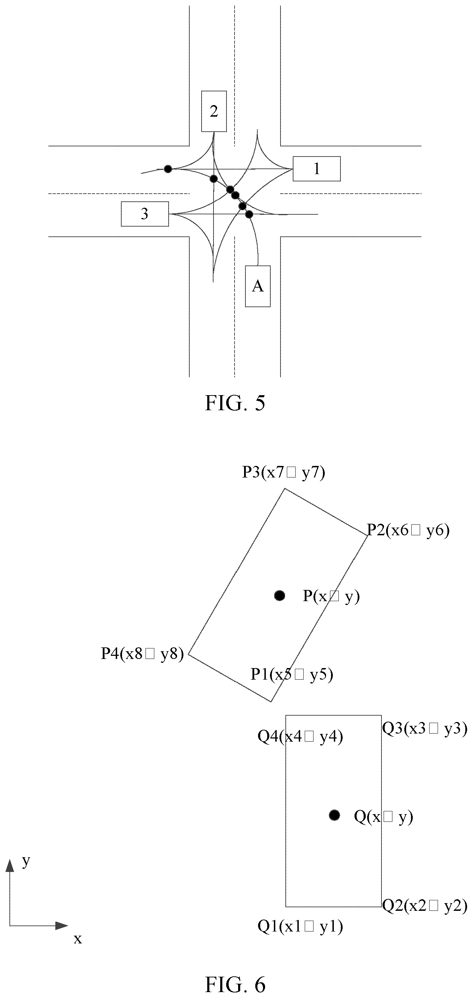

When the HV A turns left, as shown in FIG. 5, based on the collision detection conditions corresponding to the RVs in the collision detection model, the RV 1 includes going straight, turning left, and turning right, the RV 2 includes going straight, turning left, and turning right, and the RV 3 includes going straight, turning left, and turning right. There is a collision point between the RV 1 and the HV A if the RV 1 goes straight or turns left, there is a collision point between the RV 2 and the HV A if the RV 2 turns left, goes straight, or turns right, and there is a collision point between the RV 3 and the HV A if the RV 3 turns left or goes straight. Therefore, when the HV A turns left, candidate RVs include the RV 1, the RV 2, and the RV 3. A black circle mark in the figure represents a collision point between the HV and an RV.

At S1032, a target RV which has a risk of collision with the HV at the intersection is selected from the plurality of candidate RVs based on the MAP, the status information, and a BSM of each candidate RV.

In an embodiment, a collision risk point between the HV and each candidate RV at the intersection is determined based on the MAP, the status information, and the BSM of each candidate RV. A target RV which has a risk of collision with the HV is determined from the plurality of candidate RVs based on the collision risk point between the HV and each candidate RV at the intersection. Accuracy of risk warning is improved by determining the collision risk point between the HV and the candidate RV and then determining, based on the risk point, the target RV which has a risk of collision with the HV.

In an embodiment, the collision risk point between the HV and each candidate RV at the intersection may be determined based on the MAP, the status information, and the BSM of each candidate RV in the following manner. A lane of the HV is determined from a plurality of lanes at the intersection based on the MAP and the status information. A lane in which each candidate RV is located is determined from the plurality of lanes at the intersection based on the MAP and the BSM of each candidate RV. Turning information of the lane in which the HV is located and turning information of the lane in which each candidate RV is located are determined based on the MAP. The collision risk point between the HV and each candidate RV at the intersection is determined based on the turning information of the lane in which the HV is located and the turning information of the lane in which each candidate RV is located. By determining the lane of the HV and the lane of the candidate RV, the collision risk point between the HV and the candidate RV at the intersection can be accurately determined based on the turning information of the lane in which the HV is located and the turning information of the lane in which the RV is located.

In an embodiment, the collision risk point between the HV and each candidate RV at the intersection may be determined in the following manner based on the turning information of the lane in which the HV is located and the turning information of the lane in which each candidate RV is located. A point at which the lane in which the HV is located intersects with the lane in which the RV is located is used as the collision risk point between the HV and the RV at the intersection based on the turning information of the lane in which the HV is located and the turning information of the lane in which the candidate RV is located.

In an embodiment, a target RV which has a risk of collision with the HV may be determined from the plurality of candidate RVs based on the collision risk point between the HV and each candidate RV at the intersection in the following manner. For each collision risk point, a first collision time at which the HV reaches the collision risk point is determined, and a second collision time at which a candidate RV corresponding to the collision risk point reaches the collision risk point is determined. The candidate RV corresponding to the collision risk point is determined as a target RV if a difference between the first collision time and the second collision time is less than or equal to a preset threshold. The preset threshold may be set depending on an actual situation, which is not specifically limited in this embodiment. For example, the preset threshold may be set to 0.2 second. Times at which the HV and the candidate RV reach the collision risk point are determined, and if a difference between the times at which the HV and the candidate RV reach the collision risk point is less than or equal to the preset threshold, it is determined that the HV may collide with the candidate RV, and the candidate RV is determined as a target RV.

In an embodiment, the first collision time at which the HV reaches the collision risk point may be determined in the following manner. A distance from the HV to the collision risk point is determined based on the MAP and the location of the HV, and the first collision time at which the HV reaches the collision risk point may be calculated according to a time-displacement formula based on the speed and the acceleration of the HV. The time-displacement formula is

$$x = vt + \frac{1}{2}at^2$$

, where x is the distance from the HV to the collision risk point, v is the speed of the HV, a is the acceleration of the HV, and t is the first collision time. It is to be noted that for a manner of determining the second collision time at which the candidate RV corresponding to the collision risk point reaches the collision risk point, reference may be made to the manner of calculating the first collision time at which the HV reaches the collision risk point.

In an embodiment, the distance from the HV to the collision risk point may be determined based on the MAP and the location of the HV in the following manner. A first distance between the HV and a stopline location at the intersection and a second distance between the stopline location and the collision risk point are determined based on the MAP, and the first distance and the second distance are added to obtain the distance from the HV to the collision risk point. The stopline location is a traffic light stopline where the lane in which the HV is located meets the intersection. Accuracy of the calculated distance from the HV to the collision risk point can be improved by splitting the distance between the HV and the collision risk point into two parts for calculation.

For example, the first collision time at which the HV reaches the collision risk point is 10.2 seconds, the second collision time at which the candidate RV reaches the collision risk point is 10 seconds, a difference between the first collision time 10.2 seconds and the second collision time 10 seconds is 0.2 second, and the preset threshold is 0.5 second. As the difference 0.2 second between the first collision time 10.2 seconds and the second collision time 10 seconds is less than 0.5 second, the candidate RV is determined as a target RV.

At S104, in a process from the HV entering the intersection to the HV exiting the intersection, collision warning information is output if it is predicted that the HV is about to collide with the target RV.

The warning information may be set depending on an actual situation, which is not specifically limited in this embodiment. For example, the warning information may be a collision voice broadcast or a prompt sound to warn a driver to slow down.

In an embodiment, a first traveling trajectory of the HV at the intersection and a second traveling trajectory of the target RV at the intersection are generated after the HV enters the intersection. Whether the HV is about to collide with the target RV is predicted based on the first traveling trajectory and the second traveling trajectory. If it is predicted that the HV is about to collide with the target RV, the warning information is output. Accuracy of collision warning is greatly improved by generating the traveling trajectories and accurately determining, based on the traveling trajectories, whether the HV is about to collide with the target RV.

In an embodiment, the first traveling trajectory of the HV at the intersection may be generated in the following manner after the HV enters the intersection. A preset linear fitting rule is obtained. A speed, acceleration, and angular velocity at a next moment are predicted according to the preset linear fitting rule based on a speed, acceleration, and angular velocity of the HV at a current moment. The first traveling trajectory is generated based on a speed, acceleration, and angular velocity at each moment. The preset linear fitting rule is a pre-trained linear fitting rule, and the linear fitting rule may be set depending on an actual situation, which is not specifically limited in this embodiment. The first traveling trajectory of the HV at the intersection can be accurately generated based on the linear fitting rule and the speed, acceleration, and angular velocity at each moment.

It is to be noted that for the second traveling trajectory of the target RV at the intersection, reference may be made to the manner for the first traveling trajectory of the HV at the intersection. Details are not described herein again.

In an embodiment, whether the HV is about to collide with the target RV may be predicted based on the first traveling trajectory and the second traveling trajectory in the following manner. A first rectangular parameter of the HV in the first traveling trajectory is determined, and a second rectangular parameter of the target RV in the second traveling trajectory is determined. It is determined that the HV is about to collide with the target RV if it is determined that there is an overlap between a vector projection of the first rectangular parameter and a vector projection of the second rectangular parameter.

For example, as shown in FIG. 6, the HV is approximately represented by a rectangle of a top-view area of the HV, and the target RV is represented by a rectangle of a top-view area of the target RV. $Q(x, y)$ is the center point of the HV, and four vertices of the HV are $Q1(x1, y1)$, $Q2(x2, y2)$, $Q3(x3, y3)$, and $Q4(x4, y4)$. A coordinate calculation formula is obtained as

$$\begin{bmatrix} x1 & x2 & x3 & x4 \\ y1 & y2 & y3 & y4 \end{bmatrix} = R * coor + \begin{bmatrix} x & x & x & x \\ y & y & y & y \end{bmatrix},$$

where

$$R = \begin{bmatrix} \cos\theta & -\sin\theta \\ \sin\theta & \cos\theta \end{bmatrix},$$

$$coor = \begin{bmatrix} \frac{1}{2}L & \frac{1}{2}L & -\frac{1}{2}L & -\frac{1}{2}L \\ \frac{1}{2}W & -\frac{1}{2}W & -\frac{1}{2}W & \frac{1}{2}W \end{bmatrix},$$

$\theta$ is an angle between the heading angle of the HV and an x-axis, L is a length of the HV, and W is a width of the HV. Coordinates of the vertices $Q1(x1, y1)$, $Q2(x2, y2)$, $Q3(x3, y3)$, and $Q4(x4, y4)$ of the HV can be calculated based on the coordinate calculation formula and coordinates of the center point of the HV. Calculation is performed based on a separating axis theorem as follows. Any vertex, such as Q4, is selected in the HV with $Q(x, y)$, and vectors $\overrightarrow{Q4Q1}$ and $\overrightarrow{Q4Q3}$ are obtained based on its two adjacent vertices Q1 and Q3; any vertex, such as $P3(x7, y7)$, is selected in the target RV with $P(x, y)$, and vectors $\overrightarrow{P3P2}$ and $\overrightarrow{P3P4}$ are obtained based on its two adjacent vertices P2 and P4; and it is determined whether there is an overlap between projections of $\overrightarrow{Q4Q1}$, $\overrightarrow{Q4Q3}$, and $\overrightarrow{P3P2}$ on $\overrightarrow{P3P4}$. If there is an overlap, it is determined that the HV is about to collide with the target RV.

In accordance with the collision warning method in the foregoing embodiment, a MAP, status information of an HV, and BSMs of a plurality of RVs are obtained. Then, whether the HV is about to enter an intersection is determined based on the MAP and the status information. A target RV which has a risk of collision with the HV at the intersection is selected from the plurality of RVs based on the MAP, the status information, and a BSM of each RV if the HV is about to enter the intersection. Next, in a process from the HV entering the intersection to the HV exiting the intersection, collision warning information is output if it is predicted that the HV is about to collide with the target RV. When the HV is about to enter the intersection, the RV which has a collision risk is selected from the plurality of RVs, such that collision risk calculation can be reduced and detection efficiency can be improved. Whether the HV is about to collide with the target RV is predicted, such that accuracy of collision risk detection can be improved.

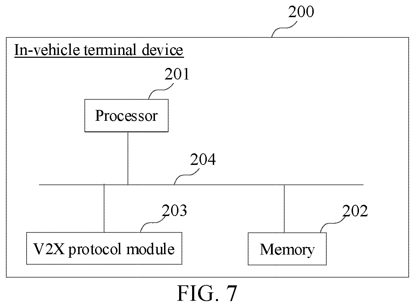

FIG. 7 is a schematic structural block diagram of an in-vehicle terminal device according to an embodiment of the present disclosure.

As shown in FIG. 7, the in-vehicle terminal device 200 includes a processor 201, a memory 202, and a V2X protocol module 203. The processor 201, the memory 202, and the V2X protocol module 203 are connected via a bus 204. The bus is, for example, an Inter-Integrated Circuit (I2C) bus. The V2X protocol module 203 is configured to process V2X protocol data.

The processor 201 is configured to provide computing and control capabilities to support running of the entire in-vehicle terminal device. The processor 201 may be a Central Processing Unit (CPU), or the processor 201 may be another general-purpose processor, a Digital Signal Processor (DSP), an Application-Specific Integrated Circuit (ASIC), a Field Programmable Gate Array (FPGA) or another programmable logic device, a discrete gate or transistor logic device, a discrete hardware component, or the like. The general-purpose processor may be a microprocessor, or the processor may be any conventional processor or the like.

The memory 202 may be a flash chip, a Read-Only Memory (ROM) disk, an optical disc, a USB flash drive, or a removable hard disk drive.

Those having ordinary skills in the art can understand that the structure shown in FIG. 7 is merely a block diagram of a structure part related to the scheme of the present disclosure, and does not constitute a limitation to the in-vehicle terminal device to which the scheme of the present disclosure is applied. An in-vehicle terminal device may include more or fewer components than those shown in the figure, or some components may be combined, or a different component arrangement may be used.

The processor is configured to execute a computer program stored in the memory, and the computer program, when executed by the processor, causes the processor to implement any one of the collision warning methods according to the embodiments of the present disclosure.

In an embodiment, the processor is configured to run a computer program stored in the memory, and the computer program, when executed by the processor, causes the processor to implement the following steps:

obtaining a MAP, status information of an HV, and BSMs of a plurality of RVs;

determining, based on the MAP and the status information, whether the HV is about to enter an intersection;

selecting a target RV which has a risk of collision with the HV at the intersection from the plurality of RVs based on the MAP, the status information, and a BSM of each RV if the HV is about to enter the intersection; and

outputting, in a process from the HV entering the intersection to the HV exiting the intersection, collision warning information if it is predicted that the HV is about to collide with the target RV.

In an embodiment, during selecting a target RV which has a risk of collision with the HV at the intersection from the plurality of RVs based on the MAP, the status information, and a BSM of each RV, the processor is configured for:

selecting one or more candidate RVs which have a risk of collision with the HV at the intersection from the plurality of RVs based on the MAP, the status information, and the BSM of each RV; and

selecting a target RV which has a risk of collision with the HV at the intersection from the plurality of candidate RVs based on the MAP, the status information, and a BSM of each candidate RV.

In an embodiment, during selecting one or more candidate RVs which have a risk of collision with the HV at the intersection from the plurality of RVs based on the MAP, the status information, and the BSM of each RV, the processor is configured for:

grouping the plurality of RVs based on the MAP, the status information, and the BSM of each RV to obtain a plurality of RV groups;

obtaining a collision detection model of the intersection, and obtaining a collision detection condition corresponding to each RV group from the collision detection model; and

screening each RV in each RV group based on the collision detection condition corresponding to each RV group to obtain one or more candidate RVs which have a risk of collision with the HV at the intersection.

In an embodiment, during selecting a target RV which has a risk of collision with the HV at the intersection from the plurality of candidate RVs based on the MAP, the status information, and a BSM of each candidate RV, the processor is configured for:

determining a collision risk point between the HV and each candidate RV at the intersection based on the MAP, the status information, and the BSM of each candidate RV; and

determining a target RV which has a risk of collision with the HV from the plurality of candidate RVs based on the collision risk point between the HV and each candidate RV at the intersection.

In an embodiment, during determining a collision risk point between the HV and each candidate RV at the intersection based on the MAP, the status information, and the BSM of each candidate RV, the processor is configured for:

determining a lane in which the HV is located from a plurality of lanes at the intersection based on the MAP and the status information;

determining a lane in which each candidate RV is located from the plurality of lanes at the intersection based on the MAP and the BSM of each candidate RV;

determining, based on the MAP, turning information of the lane in which the HV is located and turning information of the lane in which each candidate RV is located; and

determining the collision risk point between the HV and each candidate RV at the intersection based on the turning information of the lane in which the HV is located and the turning information of the lane in which each candidate RV is located.

In an embodiment, during determining a target RV which has a risk of collision with the HV from the plurality of candidate RVs based on the collision risk point between the HV and each candidate RV at the intersection, the processor is configured for:

for each collision risk point, determining a first collision time at which the HV reaches the collision risk point, and determining a second collision time at which a candidate RV corresponding to the collision risk point reaches the collision risk point; and

determining the candidate RV corresponding to the collision risk point as a target RV if a difference between the first collision time and the second collision time is less than or equal to a preset threshold.

In an implementation, the processor is further configured for:

generating a first traveling trajectory of the HV at the intersection and a second traveling trajectory of the target RV at the intersection after the HV enters the intersection; and

predicting, based on the first traveling trajectory and the second traveling trajectory, whether the HV is about to collide with the target RV.

In an embodiment, during predicting, based on the first traveling trajectory and the second traveling trajectory, whether the HV is about to collide with the target RV, the processor is configured for:

determining a first rectangular parameter of the HV in the first traveling trajectory, and determining a second rectangular parameter of the target RV in the second traveling trajectory; and

determining that the HV is about to collide with the target RV if it is determined that there is an overlap between a vector projection of the first rectangular parameter and a vector projection of the second rectangular parameter.

It is to be noted that those having ordinary skills in the art can clearly understand that for convenience and simplicity of description, for a specific working process of the in-vehicle terminal device described above, reference may be made to a corresponding process in the foregoing collision warning method embodiment. Details are not described herein again.

An embodiment of the present disclosure provides a computer-readable storage medium. The storage medium stores one or more programs which, when executed by one or more processors, cause the one or more processors to implement steps of any collision warning method according to the present disclosure.

The storage medium may be an internal storage unit of the in-vehicle terminal device in the foregoing embodiment, for example, a hard disk drive or an internal memory of the in-vehicle terminal device. Alternatively, the storage medium may be an external storage device of the in-vehicle terminal device, for example, a plug-in hard disk drive, a Smart Media Card (SMC), a Secure Digital (SD) card, or a flash card disposed on the in-vehicle terminal device.

Those having ordinary skills in the art can understand that all or some steps in the method disclosed above, the system, and functional modules/units in the apparatus may be implemented as software, firmware, hardware, and appropriate combinations thereof. In hardware implementation, the division between functional modules/units mentioned in the foregoing descriptions does not necessarily correspond to division of physical components. For example, one physical component may have a plurality of functions, or one function or step may be performed by several physical components in cooperation. Some or all physical components may be implemented as software executed by a processor, such as a CPU, a DSP, or a microprocessor, or implemented as hardware, or implemented as an integrated circuit, such as an ASIC. Such software may be distributed on a computer-readable medium. The computer-readable medium may include a computer storage medium (or a non-transitory medium) and a communication medium (or a transitory medium). As is known to those having ordinary skills in the art, the term "computer storage medium" includes volatile, non-volatile, removable, and non-removable media implemented based on any method or technology and used to store information (such as computer-readable instructions, data structures, program modules, or other data). The computer storage medium includes, but not limited to a Random Access Memory (RAM), a ROM, an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium

It is to be understood that the term "and/or" as used in the present disclosure and the claims refers to and includes any combination of one or more of items listed in association, as well as all possible combinations. It is to be clarified that the term "include", "comprise" or any other variants thereof is intended to encompass a non-exclusive inclusion, such that a process, method, device, or system including a series of elements not only includes those elements, but also includes other elements that are not explicitly listed, or elements that are inherent to such a process, method, device, or system. In the absence of more restrictions, an element defined by the phrase "including one ..." does not exclude the existence of additional identical elements in the process, method, device, or system that includes the element.

The numbers of the embodiments according to the present disclosure are merely for description, and do not represent for the advantages and disadvantages of the embodiments. The foregoing descriptions are merely specific implementations of the present disclosure, but are not intended to limit the protection scope of the present disclosure. Any variation or replacement readily figured out by those having ordinary skills in the art within the technical scope disclosed in the present disclosure shall fall within the protection scope of the present disclosure. Therefore, the protection scope of the present disclosure shall be subject to the protection scope of the claims.

## Claims

1. A collision warning method, comprising:

    obtaining a map message (MAP), status information of a host vehicle, and Basic Safety Messages (BSMs) of a plurality of remote vehicles;
    determining, based on the MAP and the status information, whether the host vehicle is about to enter an intersection;
    selecting a target remote vehicle which has a risk of collision with the host vehicle at the intersection from the plurality of remote vehicles based on the MAP, the status information, and a BSM of each remote vehicle in response to the host vehicle being about to enter the intersection; and
    outputting, in a process from the host vehicle entering the intersection to the host vehicle exiting the intersection, collision warning information in response to predicting that the host vehicle is about to collide with the target remote vehicle.

2. The collision warning method of claim 1, wherein selecting a target remote vehicle which has a risk of collision with the host vehicle at the intersection from the plurality of remote vehicles based on the MAP, the status information, and a BSM of each remote vehicle comprises:

    selecting one or more candidate remote vehicles which have a risk of collision with the host vehicle at the intersection from the plurality of remote vehicles based on the MAP, the status information, and the BSM of each remote vehicle; and
    selecting a target remote vehicle which has a risk of collision with the host vehicle at the intersection from the plurality of candidate remote vehicles based on the MAP, the status information, and the BSM of each candidate remote vehicle.

3. The collision warning method of claim 2, wherein selecting one or more candidate remote vehicles which have a risk of collision with the host vehicle at the intersection from the plurality of remote vehicles based on the MAP, the status information, and a BSM of each remote vehicle comprises:

    grouping the plurality of remote vehicles based on the MAP, the status information, and the BSM of each remote vehicle to obtain a plurality of remote vehicle groups;
    obtaining a collision detection model of the intersection, and obtaining a collision detection condition corresponding to each remote vehicle group from the collision detection model; and
    screening each remote vehicle in each remote vehicle group based on the collision detection condition corresponding to each remote vehicle group to obtain one or more candidate remote vehicles which have a risk of collision with the host vehicle at the intersection.

4. The collision warning method of claim 2, wherein selecting a target remote vehicle which has a risk of collision with the host vehicle at the intersection from the plurality of candidate remote vehicles based on the MAP, the status information, and a BSM of each candidate remote vehicle comprises:

    determining a collision risk point between the host vehicle and each candidate remote vehicle at the intersection based on the MAP, the status information, and the BSM of each candidate remote vehicle; and
    determining a target remote vehicle which has a risk of collision with the host vehicle from the plurality of candidate remote vehicles based on the collision risk point between the host vehicle and each candidate remote vehicle at the intersection.

5. The collision warning method of claim 4, wherein determining a collision risk point between the host vehicle and each candidate remote vehicle at the intersection based on the MAP, the status information, and the BSM of each candidate remote vehicle comprises:

    determining a lane in which the host vehicle is located from a plurality of lanes at the intersection based on the MAP and the status information;
    determining a lane in which each candidate remote vehicle is located from the plurality of lanes at the intersection based on the MAP and the BSM of each candidate remote vehicle;
    determining, based on the MAP, turning information of the lane in which the host vehicle is located and turning information of the lane in which each candidate remote vehicle is located; and
    determining the collision risk point between the host vehicle and each candidate remote vehicle at the intersection based on the turning information of the lane in which the host vehicle is located and the turning information of the lane in which each candidate remote vehicle is located.

6. The collision warning method of claim 4, wherein determining a target remote vehicle which has a risk of collision with the host vehicle from the plurality of candidate remote vehicles based on the collision risk point between the host vehicle and each candidate remote vehicle at the intersection comprises:

   for each collision risk point, determining a first collision time at which the host vehicle reaches the collision risk point, and determining a second collision time at which a candidate remote vehicle corresponding to the collision risk point reaches the collision risk point; and
   determining the candidate remote vehicle corresponding to the collision risk point as a target remote vehicle in response to a difference between the first collision time and the second collision time being less than or equal to a preset threshold.

7. The collision warning method of any one of claims 1 to 6, further comprising:

   generating a first traveling trajectory of the host vehicle at the intersection and a second traveling trajectory of the target remote vehicle at the intersection after the host vehicle enters the intersection; and
   predicting, based on the first traveling trajectory and the second traveling trajectory, whether the host vehicle is about to collide with the target remote vehicle.

8. The collision warning method of claim 7, wherein predicting, based on the first traveling trajectory and the second traveling trajectory, whether the host vehicle is about to collide with the target remote vehicle comprises:

   determining a first rectangular parameter of the host vehicle in the first traveling trajectory, and determining a second rectangular parameter of the target remote vehicle in the second traveling trajectory; and
   determining that the host vehicle is about to collide with the target remote vehicle in response to an overlap existing between a vector projection of the first rectangular parameter and a vector projection of the second rectangular parameter.

9. An in-vehicle terminal device, comprising a processor, a memory, a computer program stored in the memory and executable by the processor, and a data bus for connection and communication between the processor and the memory, wherein the computer program, when executed by the processor, causes the processor to perform the steps of the collision warning method of any one of claims 1 to 8.

10. A computer-readable storage medium, storing one or more programs which, when executed by one or more processors, cause the one or more processors to perform the steps of the collision warning method of any one of claims 1 to 8.

S101

Obtain MAP, status information of a host vehicle, and BSMs of a plurality of remote vehicles

S102

Determine, based on the MAP and the status information, whether the host vehicle is about to enter an intersection

S103

Select a target remote vehicle which has a risk of collision with the host vehicle at the intersection from the plurality of remote vehicles based on the MAP, the status information, and a BSM of each remote vehicle if the host vehicle is about to enter the intersection

S104

Output, in a process from the host vehicle entering the intersection to the host vehicle exiting the intersection, collision warning information if it is predicted that the host vehicle is about to collide with the target remote vehicle

FIG. 1

S1031

Select one or more candidate remote vehicles which have a risk of collision with the host vehicle at the intersection from the plurality of remote vehicles based on the MAP, the status information, and the BSM of each remote vehicle

S1032

Select a target remote vehicle which has a risk of collision with the host vehicle at the intersection from the plurality of candidate remote vehicles based on the MAP, the status information, and a BSM of each candidate remote vehicle

FIG. 2

FIG. 3

FIG. 4

FIG. 5

FIG. 6

200

In-vehicle terminal device

201

Processor

204

203

V2X protocol module

202

Memory

FIG. 7

## INTERNATIONAL SEARCH REPORT

International application No.

**PCT/CN2023/074615**

| A. | CLASSIFICATION OF SUBJECT MATTER |
|---|---|

G08G1/16(2006.01)i;H04W4/40(2018.01)i

According to International Patent Classification (IPC) or to both national classification and IPC

| B. | FIELDS SEARCHED |
|---|---|

Minimum documentation searched (classification system followed by classification symbols)

IPC:G08G H04W

Documentation searched other than minimum documentation to the extent that such documents are included in the fields searched

Electronic data base consulted during the international search (name of data base and, where practicable, search terms used)

CNABS; CNTXT; CNKI; WPABSC; ENTXTC; WPABS; ENTXT: 中兴, 路口, 交叉口, 碰撞, 预警, 警示, 告警, 地图, 周边, 周围, 轨迹, 路线, 路径, 交叉, 交点, intersect, crossing, warn+, caution, alarm, alert+, map, surround, route, path, overlap+, nodal

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110310481 A (ZHEJIANG GEELY AUTOMOBILE HOLDING GROUP CO., LTD. et al.) 08 October 2019 (2019-10-08) description, paragraphs [0004]-[0082], and figures 1-7 | 1, 7-10 |
| Y | CN 110310481 A (ZHEJIANG GEELY AUTOMOBILE HOLDING GROUP CO., LTD. et al.) 08 October 2019 (2019-10-08) description, paragraphs [0004]-[0082], and figures 1-7 | 2-10 |
| Y | CN 112249012 A (BEIJING HANGJI TECHNOLOGY CO., LTD.) 22 January 2021 (2021-01-22) description, paragraphs [0004]-[0065], and figures 1-8 | 2-10 |
| A | CN 110782703 A (CHANG'AN UNIVERSITY) 11 February 2020 (2020-02-11) entire document | 1-10 |
| A | CN 111640329 A (NANJING DESAY SV AUTOMOTIVE ELECTRONIC CO., LTD.) 08 September 2020 (2020-09-08) entire document | 1-10 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 March 2023** | **14 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2023/074615**

**C.     DOCUMENTS CONSIDERED TO BE RELEVANT**

| Category* | Citation of document, with indication, where appropriate, of the relevant passages | Relevant to claim No. |
|---|---|---|
| A | CN 111806457 A (GUANGZHOU AUTOMOBILE GROUP CO., LTD.) 23 October 2020 (2020-10-23)<br>  entire document | 1-10 |

Form PCT/ISA/210 (second sheet) (July 2022)

**INTERNATIONAL SEARCH REPORT**
**Information on patent family members**

| | | | International application No. |
|---|---|---|---|
| | | | **PCT/CN2023/074615** |

| Patent document<br>cited in search report | Publication date<br>(day/month/year) | Patent family member(s) | Publication date<br>(day/month/year) |
|---|---|---|---|
| CN     110310481     A | 08 October 2019 | None | |
| CN     112249012     A | 22 January 2021 | None | |
| CN     110782703     A | 11 February 2020 | None | |
| CN     111640329     A | 08 September 2020 | None | |
| CN     111806457     A | 23 October 2020 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210334288